# EUROPÄISCHE PATENTSCHRIFT

(11) **EP 1 479 944 B1**
(45) Veröffentlichungstag und Bekanntmachung des Hinweises auf die Patenterteilung: **07.07.2010**
(21) Anmeldenummer: 04010924.1
(22) Anmeldetag: 07.05.2004
(51) Int. Cl.: F16H 7/02, B62D 55/30

(54) **Kettenumlaufeinrichtung bzw. Bandumlaufeinrichtung und Verfahren zu deren Betrieb**
Chain rotary drive respectively belt rotary drive and and method of operating
Entraînement rotatif par chaîne, respectivement courroie et procédé d'opération

(30) Priorität: 23.05.2003 DE 10323910
(43) Veröffentlichungstag der Anmeldung: 24.11.2004
(73) Patentinhaber: SIEMENS AKTIENGESELLSCHAFT, 80333 München (DE)
(72) Erfinder: Forster, Gerhard, 90592 Schwarzenbruck (DE); Hamann, Jens, Dr., 90765 Fürth (DE); Stoiber, Dietmar, 90763 Fürth (DE); Wedel, Bernd, 90408 Nürnberg (DE)

(56) Entgegenhaltungen:
- EP-A- 1 153 857
- EP-A1- 0 903 307
- EP-A1- 0 916 599
- DD-A1- 112 679
- DE-A1- 2 049 475
- DE-A1- 2 504 696
- JP-A- 3 216 409
- JP-A- 9 221 213
- JP-A- 11 322 037
- JP-A- 54 022 628
- SU-A1- 459 628
- SU-A2- 1 668 227
- US-A- 5 997 423

## Beschreibung

Die Erfindung betrifft eine Ketteumlaufeinrichtung bzw. eine Bandumlaufeinrichtung bzw. ein Verfahren zur Führung einer Kette einer Kettenumlaufeinrichtung bzw. zum Führen eines Bandes einer Bandumlaufeinrichtung. Die Kettenumlaufeinrichtung ist beispielsweise eine Einrichtung welche eine Transportkette aufweist. Die Transportkette weist eine Kettenumlaufbahn auf. Die Kettenumlaufbahn ist in vorteilhafter Weise in zumindest zwei Teilstücke gegliedert, so dass die Transportkette mechanisch vorgespannt werden kann. Die Vorspannung wird beispielsweise dadurch erreicht, dass die beiden Teilstücke der Kettenumlaufbahn beispielsweise mittels der Kraft einer Feder auseinandergedrückt werden, wodurch sich die Kette, welche die beiden Teilstücke umschlingt, spannt. Somit spannen sich auch Kettenglieder, welche die Kette aufweist. Die Teilstücke sind insbesondere Teile eines Maschinenkörpers.

In einer Ausführungsform der Kette sind die Kettenglieder als Kettenwägen ausgeführt, wobei die Kettenwägen Führungsräder aufweisen. Da die Transportkette, d.h. die Kette durch die Federkraft der Feder gespannt ist, können an der Transportkette Vibrationen bzw. Schwingungen auftreten. Durch diese Vibrationen bzw. Schwingungen wird die Kette belastet und unterliegt einem Verschleiß. Der Verschleiß betrifft nachteilig auch Teile der Kettenumlaufeinrichtung. Insbesondere auch im Bereich des Übertritts von einem Teilstück zum anderen Teilstück treten Stöße bzw. Vibrationen bei der Transportkette bzw. bei deren Führung auf. Dies führt nicht nur zu einer hohen Geräuschausbildung sondern auch zu einem erheblichen Verschleiß.

Aus der gattungsgemaßen US 5,997,423 ist ein System zur Überwachung der Spannung einer Kette bekannt. Das System misst die Kettenspannung und kann einen Permanentmagneten, welcher der Kette gegenüber positioniert ist derart in seiner Position verändern, dass Vibrationen der Kette oder Kettengeräusche verhindert werden.

Aus der SU 459 628 ist eine Kettenumlaufeinrichtung bekannt, welche eine Umlenkrolle aufweist. Die Umlenkrolle weist Elektromagneten auf, welche in einem Segmentabschnitt der Umlenkrolle angeordnet sind.

Aufgabe der vorliegenden Erfindung ist es, eine Kettenumlaufeinrichtung bzw. eine Bandumlaufeinrichtung sowie ein entsprechendes Verfahren zum Betrieb anzugeben, durch welche(s) zumindest eines der oben genannten Probleme reduziert bzw. vermieden wird.

Diese Aufgabe wird erfindungsgemäß nach einem der Ansprüche 1 und 3 gelöst.

Bei einer Kettenumlaufeinrichtung, welche eine Kette aufweist, wobei die Kette mittels zumindest einer Umlenkeinrichtung umlenkbar ist und die Kette zumindest in einen Abschnitt der Kettenumlaufbahn mittels einer Führungseinrichtung führbar ist, ist ein Mittel zur Erzeugung eines magnetischen Feldes zur Ausübung einer magnetischen Kraft auf die Kette zumindest in einen Bereich der Führungseinrichtung vorgesehen.

Mit der Hilfe des Mittels zur Erzeugung eines magnetischen Feldes ist die Kette wie z.B. einer Transportkette an eine Führungseinrichtung heranziehbar. Dadurch dass die herangezogene Kette an der Führungseinrichtung anliegt führt die Führungseinrichtung die Kette im Falle der Bewegung der Kette auf einer Bahn. Weist die Kette beispielsweise Führungsräder auf und rollen die Führungsräder auf der Führungseinrichtung ab, so ist durch das Mittel zur Erzeugung des magnetischen Feldes stets eine Verbindung zwischen den Führungsrädern der Kette und der Führungseinrichtung, auf welche diese Führungsräder abrollen, herstellbar.

Durch das Mittel zur Erzeugung eines magnetischen Feldes sind zumindest einzelne Kettenglieder oder alle Kettenglieder, welche die Kette aufweist, durch ein magnetisches Feld beeinflussbar bzw. wirkt auf diese eine magnetische Kraft. Die Beeinflussbarkeit der Kettenglieder ist beispielsweise durch einen Magnetwerkstoff herstellbar, welchen diese Kettenglieder aufweisen. Ein magnetischer Werkstoff ist beispielsweise ein Dauermagnet oder ein ummagnetisierbarer, d.h. weichmagnetischer Werkstoff, insbesondere ein Eisenwerkstoff, der magnetisierbar ist, eine geringe Koerzitivkraft aufweist und nach dem verschwinden eines magnetisierenden Feldes einen hohen Anteil der Magnetisierung verliert, d.h. eine geringe Remanenz aufweist.

Die vorteilhafte Wirkung des magnetischen Feldes ist sowohl durch eine abstoßende Wirkung als auch durch eine anziehende Wirkung des magnetischen Feldes erzielbar. Bei der Nutzung der abstoßenden Wirkung weist die Kette z.B. einen Permanentmagneten oder einen Elektromagneten auf, welcher ein magnetisches Feld aufweist, welches einen weiteren magnetischen Feld entgegengesetzt ist. Durch die Abstoßung ist die Kette an eine Führungseinrichtung drückbar.

In einer weiteren Ausgestaltung der Kettenumlaufeinrichtung ist durch das Mittel zur Erzeugung des magnetischen Feldes eine Kraft auf die Kette ausübbar, wobei durch die Kraft die Kette an die Führungseinrichtung drückbar ist. Dabei ist das Mittel zur Erzeugung des magnetischen Feldes, wie z.B. ein Dauermagnet/Permanentmagnet nicht ein Teil der Kette sonder über die Kette verläuft lediglich das magnetische Feld.

Weist die Kette bzw. Teile der Kette einen Magnetwerkstoff auf, der ummagnetisierbar ist, also eine geringe Koerzitivkraft bzw. eine geringe Remanenz aufweist, so ist kostengünstig, unter Einsatz z.B. von weichmagnetischen Eisenwerkstoffen und mit Hilfe lediglich eines magnetischen Feldes, welches nicht in Wechselwirkung zu einem zweiten magnetischen Feld zu treten hat um eine magnetische Kraft auszubilden, eine Kettenumlaufeinrichtung auszubilden. Stöße, Vibrationen und ein zu hoher Verschleiß werden durch das magnetisch verursachte Heranziehen der einzelnen Kettenglieder auf die Führungseinrichtung, welche eine Führungsbahn ausbildet, verringert bzw. eliminiert. Der Einsatz des Mittels zur Erzeugung des magnetischen Feldes, wie es z.B. ein Permanentmagnet oder ein Elektromagnet ist, weist auch Vorteile bezüglich eines mechanischen Spiels zwischen den einzelnen Kettengliedern einer Kette auf. Auch bei einen derartigen mechanischen Spiel zwischen den einzelnen Kettengliedern löst sich die Kette nunmehr nicht mehr von der Führungseinrichtung. Die Führungseinrichtung erstreckt sich beispielsweise über einen einzelnen Bereich der Kettenumlaufbahn oder über mehrere Bereiche bzw. die gesamte Kettenumlaufbahn. Dadurch, dass die Kettenglieder der Kette einzeln an die Führungseinrichtung durch die magnetische Kraft drückbar sind und sich von der Führungseinrichtung nicht mehr ablösen, kann auch die Notwendigkeit der mechanischen Vorspannung der Kettenumlaufbahn entfallen bzw. entfällt zumindest ein bislang notwendiges Nachspannen der Kettenumlaufeinrichtung. Dadurch, dass eine derartige mechanische Vorspannung nicht mehr notwendig ist, ergibt sich ein reduzierter mechanischer Aufwand bei der Herstellung bzw. dem Betrieb der Kettenumlaufeinrichtung bzw. der Bandumlaufeinrichtung, was zu Kosteneinsparungen führt. Die Kettenumlaufbahn ist nun aus einem Stück aufbaubar, wodurch auch mögliche Probleme bezüglich Vibrationen, welche durch die Aufteilung in Teilstücke hervorgerufen werden bzw. durch die Verwendung einer Feder zur Spannung herrühren entfallen.

Insbesondere bei Transportketten, welche hohe Geschwindigkeiten der Kette aufweisen, sind erfindungsgemäß Verschleißerscheinungen der Kette bzw. der Führungseinrichtung reduzierbar. Dies hat den positiven Effekt, dass Verschleißteile wie eben die Kette bzw. die Führungseinrichtung seltener auszutauschen sind, was zu höheren Betriebszeiten und kürzeren Standzeiten führt.

In einer vorteilhaften Ausgestaltung weist die Kettenumlaufeinrichtung ein Flussleitstück zur Leitung des magnetischen Flusses auf, wobei insbesondere das Flussleitstück an einem Luftspalt anschließt, wobei der magnetische Fluss über den Luftspalt führbar ist.

Durch die Verwendung eines oder mehrere Flussleitstücke, welche insbesondere einen ummagnetisierbaren Eisenwerkstoff aufweisen, ist das erzeugte magnetische Feld derart leitbar, dass eine hohe magnetische Kraft hervorrufbar ist. Ein Luftspalt ist vorteilhafter Weise möglichst klein, wobei im Extremfall der Luftspalt gegen Null geht und mit Hilfe des Flussleitstückes das magnetische Feld ohne einen Luftspalt schließbar ist.

In einer vorteilhaften Ausgestaltung weist die Kette das Mittel zur Erzeugung eines magnetischen Feldes auf und/oder das Mittel zur Erzeugung eines magnetischen Feldes ist stationär in Bezug auf die Führungseinrichtung.

Weist die Kette das Mittel zur Erzeugung des magnetischen Feldes auf, so hat dies den Vorteil, dass dieses Mittel zur Erzeugung des magnetischen Feldes während des Umlaufs der Kette auf der gesamten Kettenumlaufbahn einen magnetischen Fluss und somit gegebenenfalls eine magnetische Kraft bewirkt.

Ist das Mittel zur Erzeugung des magnetischen Feldes stationär in Bezug auf die Führungseinrichtung so ist eine leichte Montage realisierbar, bei der auch die Trägheit der Kette nicht erhöht wird, was dem dynamischen Verhalten der Kettenumlaufeinrichtung zu gute kommt.

In einer weiteren vorteilhaften Ausgestaltung ist das Mittel zur Erzeugung des magnetischen Flusses in einem Bereich der Umlenkeinrichtung bzw. insbesondere im Bereich eines Ketteneinlaufes angeordnet.

Gerade im Bereich der Umlenkeinrichtung bzw. im Bereich des Ketteneinlaufes unterliegt die Kette bzw. eine dort vorhandene Führungseinrichtung einem hohen Verschleiß. Der hohe Verschleiß im Bereich des Ketteneinlaufs, d.h. der Ketteneinlaufseite, ist insbesondere dann gegeben, wenn eine Umlenkeinrichtung, die auch als Kettenradkopf bezeichnet werden kann, federnd an einen Teilstück eines Maschinenkörpers angebaut ist. Dies liegt daran, das der federnde Kettenradkopf, d.h. die federnde Umlenkeinrichtung mehrere Schwingungsmodi aufweist. Durch den federnden Anbau, wobei dieser bislang insbesondere zur Erzielung der Vorspannung der Kette notwendig ist, entsteht eine Fügestelle zwischen der Umlenkeinrichtung und den Maschinenkörper, durch welche die Schwingungen zusätzlich angeregt werden können.

Vorteilhafterweise kann auf die Vorspannung z.B. mittels einer Feder verzichtet werden, wenn eine elektrische Vorspannung der Kette durchführbar ist. Damit ist die Umlenkeinrichtung, d.h. der Kettenradkopf, fest mit den Maschinenkörper verbindbar. Die elektrische Vorspannung lässt sich beispielsweise mittels eines Vorspanndrehmomentes bzw. eines Bremsmomentes für die Antriebe der Umlenkeinrichtungen erzielen. Damit ist die Schwingungsneigung der Umlenkeinrichtung auf ein minimum reduzierbar. Des Weiteren entfällt die Fügestelle zwischen Umlenkeinrichtung und Maschinenkörper. Dadurch ist es möglich, die Kette auf der Kettenumlaufbahn ohne eine einzige Fügestelle zwischen der Umlenkeinrichtung und den Maschinenkörper auf der Umlaufbahn zu halten. Ein etwaiges Schwingen bzw. Rattern der Kette ist so vermeidbar.

Das Mittel zur Erzeugung eines magnetischen Flusses ist entweder ein magnetisierter Werkstoff wie z.B. ein Permanentmagnet/Dauermagnet z.B. aus einen gehärteten Kohlenstoffstahl, welcher eine hohe Remanenz aufweist oder auch ein Elektromagnet, der den magnetischen Fluss durch anlegen eines elektrischen Stromes erzeugt.

Erfindungsgemaß ist die Größe des Luftspaltes variierbar. Durch die Variierung des Luftspaltes ist die magnetische Kraft, welche auf die Kette wirkt, auch variierbar.

Die Größe des Luftspaltes ist in Abhängigkeit von der Umlaufgeschwindigkeit der Kette abänderbar. Bei hohen Geschwindigkeiten ist durch Reduzierung des Luftspaltes die magnetische Kraft vergrößerbar, so dass trotz hoher Fliehkräfte die Kette stets an der Führungseinrichtung führbar ist. Bei geringen Umlaufgeschwindigkeiten der Kette ist beispielsweise der Luftspalt derart vergrößerbar, das die magnetische Kraft zur Führung der Kette an der Führungseinrichtung ausreicht und durch eine reduzierte Reibung im Vergleich zu hohen magnetischen Kräften der Verschleiß reduziert ist.

Der Aufbau der erfindungsgemäßen Kettenumlaufeinrichtung ist auch auf eine Bandumlaufeinrichtung übertragbar. Bei der Bandumlaufeinrichtung entspricht das Band der Kette der Kettenumlaufeinrichtung und der Bereich des Ketteneinlaufs entspricht den Bereich des Bandeinlaufes, usw.. Das Band weist im Gegensatz zur Kette, keine Kettenglieder auf.

Bei einen Verfahren zur Führung einer Kettenumlaufeinrichtung bzw. bei einen Verfahren zur Führung eines Bandes einer Bandumlaufeinrichtung wird mittels eines Mittel zur Erzeugung eines magnetischen Feldes insbesondere einen Dauermagneten bzw. einen Elektromagneten, eine magnetische Kraft auf die Kette oder das Band ausgeübt, wonach die Kette bzw. das Band an eine Führungseinrichtung gezogen bzw. gedrückt wird.

Zur Regelung der magnetischen Kraft auf die Kette wird das magnetische Feld über einen Luftspalt geführt, wonach die Größe des Luftspalts zur Regelung der Kraft auf die Kette oder auf das Band verändert wird. Die magnetische Kraft wird abhängig von der Geschwindigkeit der Kette oder des Bandes verändert.

In einer vorteilhaften Ausgestaltung ist die Verwendung des Mittels zur Erzeugung des magnetischen Feldes kombiniert mit der Möglichkeit, dass die Kette bzw. das Band elektronisch gespannt werden. Die elektronisch erzeugte mechanische Vorspannung erfolgt beispielsweise durch ein Vorspanndrehmoment bzw. durch ein Bremsmoment, welches bei einer Steuerungs- bzw. Regelungseinrichtung eines Antriebs vorgebbar ist, welcher zum Antrieb der Umlenkeinrichtungen der Kettenumlaufeinrichtung bzw. der Bandumlaufeinrichtung vorgesehen ist.

Die erfindungsgemäße Kettenumlaufeinrichtung bzw. Bandumlaufeinrichtung bzw. ein diesbezügliches Verfahren ist bei Produktionsmaschinen bzw. Werkzeugmaschinen einsetzbar. Eine Produktionsmaschine bzw. eine Werkzeugmaschine, welche eine erfindungsgemäße Kettenumlaufeinrichtung bzw. eine erfindungsgemäße Bandumlaufeinrichtung aufweist ist zumindest mit einem Sensor zur Verschleißerkennung einer Kette bzw. einer Führungseinrichtung bzw. Umlenkeinrichtung ausstattbar bzw. weist diesen auf. Ein derartiger Sensor ist beispielsweise zur Messung des magnetischen Feldes vorgesehen, wobei Maßnahmen getroffen sind dass sich abhängig von dem Verschleiß sich das magnetische Feld ändert.

Bei Produktionsmaschinen bzw. Werkzeugmaschinen sind die Umlenkeinrichtungen, insbesondere die Kettenumlenkeinrichtung bzw. die Bandumlaufeinrichtung oftmals mittels elektrischer Antriebe angetrieben. Diese elektrischen Antrieb sind vorteilhafter Weise eine über einen elektrischen Antrieb erzeugte mechanische über Stromrichter regelbar. Dadurch lässt sich auf einfache Weise eine über einen elektrischen Antrieb erzeugte mechanische Spannung der Kette bzw. des Bandes mit dem Einsatz eines Mittels zur Erzeugung eines magnetischen Feldes zur verschleißfreieren Führung der Kette bzw. des Bandes kombinieren.

Die obig beschriebene Weiterbildung einer Kettenumlenkeinrichtung ist auch bei Kettenumlenkeinrichtungen für ein Kettenfahrzeug einsetzbar. Beispiele für Kettenfahrzeuge sind z.B. Baufahrzeuge wie ein Kran, ein Bagger, eine Raupe, welche einen kettenbasierte Antriebseinrichtung aufweisen. Auch ein Roboter ist beispielsweise derart ausstattbar, dass dieser einen Kettenantrieb mit der erfindungsgemäßen Kettenumlenkeinrichtung zur Fortbewegung aufweist. Auch gepanzerte Fahrzeuge wie Panzer bzw. auch Transportfahrzeuge sind als Kettenfahrzeug ausführbar. Ein Kettenfahrzeug ist beispielsweise auch ein Schaufelradbagger oder ein Bagger zur Förderung von Braunkohle bzw. Steinkohle.

Bei Kettenfahrzeugen lassen sich durch die Kettenumlaufeinrichtung unter anderem Vibrationen, Schwingungen bzw. Verschleiß reduzieren. Dies trifft insbesondere bei hohen Geschwindigkeiten zu, wobei durch eine verbesserte Führung der Kette die Maximalgeschwindigkeit erhöhbar ist. Aber auch bei niedrigen Geschwindigkeiten des Kettenfahrzeuges ergeben sich Vorteile. Bei niedrigen Geschwindigkeiten kann eine Verschmutzung der Kette, eine statisch ungünstige Beladung des Kettenfahrzeuges oder auch Unebenheiten in der Fahrbahn z.B. zu Schwingungen bzw. Vibrationen führen. Diese Probleme sind erfindungsgemäß zumindest reduzierbar.

Zur weiteren Erläuterung der Erfindung wird auf die Zeichnung bezug genommen, in der Beispiele für Ausführungsformen der Erfindung schematisch veranschaulicht sind. Dabei zeigt:
- FIG 1: eine Kettenumlaufeinrichtung 1,
- FIG 2: einen Detailausschnitt der Kettenumlaufeinrichtung,
- FIG 3: einen Detailausschnitt einer Führungseinrichtung der Kettenumlaufeinrichtung,
- FIG 4: eine erfindungsgemäße Kettenumlaufeinrichtung,
- FIG 5: einen Ausschnitt mit einr Umlenkeinrichtung der Kettenumlaufeinrichtung ,
- FIG 6: den Verlauf eines magnetischen Feldes,
- FIG 7: einen weiteren Verlauf eines magentischen Feldes,
- FIG 8: den Aufbau eines Führungsrades eines Kettengliedes,
- FIG 9: eine detailiertere Anordnung eines Magneten (Permanentmagneten),
- FIG 10: eine gerade Magnetschablone,
- FIG 11: eine gekrümmte Magnetschablone,
- FIG 12: eine Magnetschablone mit gekrümmten und geradem Ansatz und
- FIG 13: ein Flussleitstück.

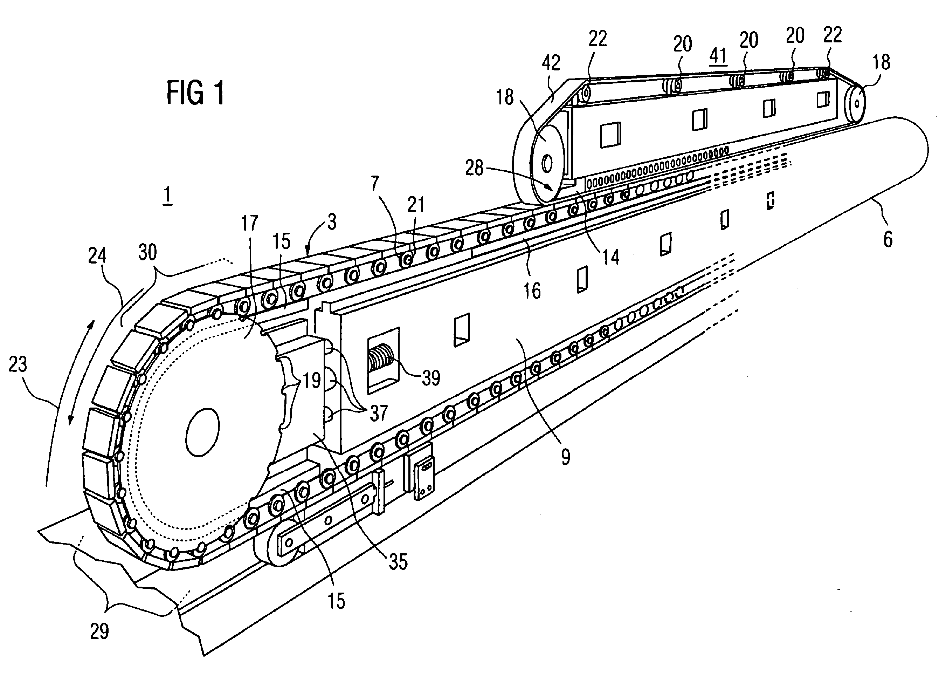

Die Darstellung gemäß FIG 1 zeigt eine Kettenumlaufeinrichtung 1 in Verbindung mit einer Bandumlaufeinrichtung 41. Die Kettenumlaufeinrichtung 1 weist eine Kette 3 auf, welche aneinandergereihte Kettenglieder aufweist. Die Kette 3 bewegt auf einer Kettenumlaufbahn 6, welche in der FIG 1 zur Verbesserung der Übersichtlichkeit schematisch nur ansatzweise dargestellt ist. Die Kettenumlaufbahn 6 der Kette 3 bildet einen geschlossenen Ring aus. Die Umlenkung der Kette 3 erfolgt mittels Umlenkeinrichtungen 17, wobei in der FIG 1 lediglich eine Umlenkeinrichtung 17 dargestellt ist. Die Umlenkeinrichtung 17 weist Ausnehmungen 19 auf. In diese Ausnehmungen greifen Mitnahmedorne 21 der Kette 3. Die Kette 3 ist über Führungsräder 7, welche die Mitnahmedorne 21 aufweisen, geführt, wobei die Führungsräder 7 mittels einer Führungseinrichtung 14, 16 geführt werden. Die Führungseinrichtungen 15, 16 bilden eine Fahrbahn für die Führungsräder 7. Die Führungseinrichtung 15 ist im Bereich der Umlenkeinrichtung 17, welche auch als Kettenradkopf bezeichnet ist, kreisförmig gekrümmt, was durch die Strichliniierung angedeutet ist. Die Umlenkeinrichtung 17 sitzt auf einem Spannkörper 35. Der Spannkörper ist über Zylinder 37 mit einen Maschinenkörper 9 verbunden. Mittels einer Feder 39 und über die Zylinder 37 ist der Spannkörper 35, auf welchen die Umlenkeinrichtung 17 drehbar gelagert ist, von den Maschinenkörper 9 weg drückbar, so dass durch eine derartige Federkraft eine aufgezogene Kette 3 gespannt wird. Abhängig von der Umlaufrichtung 23, 24 der Kette 3 stellen sich im Bereich der Umlenkeinrichtung 17 ein Bereich Ringketteneinlauf 29 bzw. ein Bereich Ringkettenauslauf 28 und umgekehrt ein.

Üblicherweise ist bei Transportketten der fest mit den Maschinenkörper verbundene Kettenradkopf, d.h. die Umlenkeinrichtung, elektrisch angetrieben. Der Kettenradkopf auf der gegenüberliegenden Seite dient lediglich zur Führung der Kette. Dieser wird zudem über Federelemente vom feststehenden Maschinenkörper weggedrückt, um die Kette zu spannen. Ein Antrieb von mehr als einer Umlenkeinrichtung ist jedoch auch durchführbar.

Ein in der FIG 1 nicht dargestelltes Transportgut ist beispielsweise sowohl durch die Kettenumlaufeinrichtung als auch durch eine gegenüberliegende Bandumlaufeinrichtung 41 gemeinsam transportierbar. Die Bandumlaufeinrichtung 41 weist wie die Kettenumlaufeinrichtung 1 eine Umlenkeinrichtung 18 auf, wobei die Umlaufeinrichtung 18 mit sekundären Umlenkeinrichtungen 22 kombiniert ist. Weiterhin weist die Bandumlaufeinrichtung weitere Führungsrollen 20 zur Führung des Bandes 42 auf. Die sekundären Umlenkeinrichtungen 22 unterscheiden sich von den Umlenkeinrichtungen 18, insbesondere dadurch, dass zumindest eine der Umlenkeinrichtungen 18 zum Vortrieb des Bandes 42 vorgesehen ist und mit einem Antrieb, insbesondere einen elektrischen Antrieb mechanisch verbunden ist. Auch das Band 42 ist über eine Führungseinrichtung 14 führbar, so dass der Einlauf bzw. Auslauf des Bandes in und um die Umlenkeinrichtung 18 sich problemlos vollziehen kann.

Erfindungsgemäß sind nun im Bereich der Führungseinrichtungen 14, 15 und 16 Magnete angebracht, welche die Kette 3 bzw. das Band an der Führungseinrichtung 14, 15 bzw. 16 halten. Diese Magnete sind in der Darstellung gemäß FIG 1 jedoch nicht gezeigt.

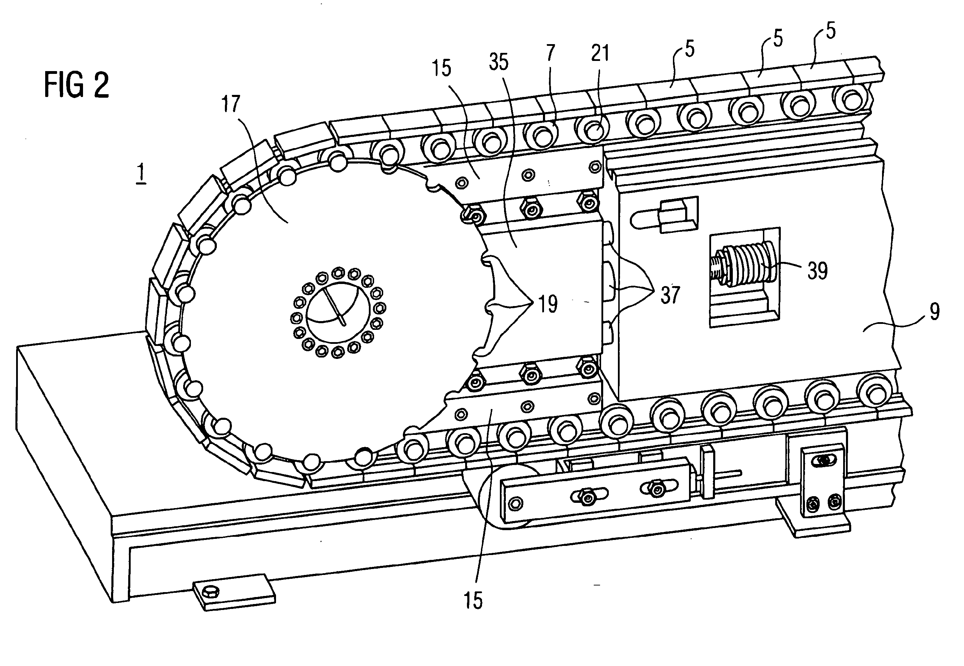

Die Darstellung gemäß FIG 2 zeigt einen Ausschnitt der FIG 1, wobei insbesondere die Umlenkeinrichtung 17 und die Führungseinrichtung 15 detailliert dargestellt sind. Die Führungseinrichtung 15 bildet die Laufbahn für die Führungsräder 7, welche die Mitnahmedorne 21 aufweisen.

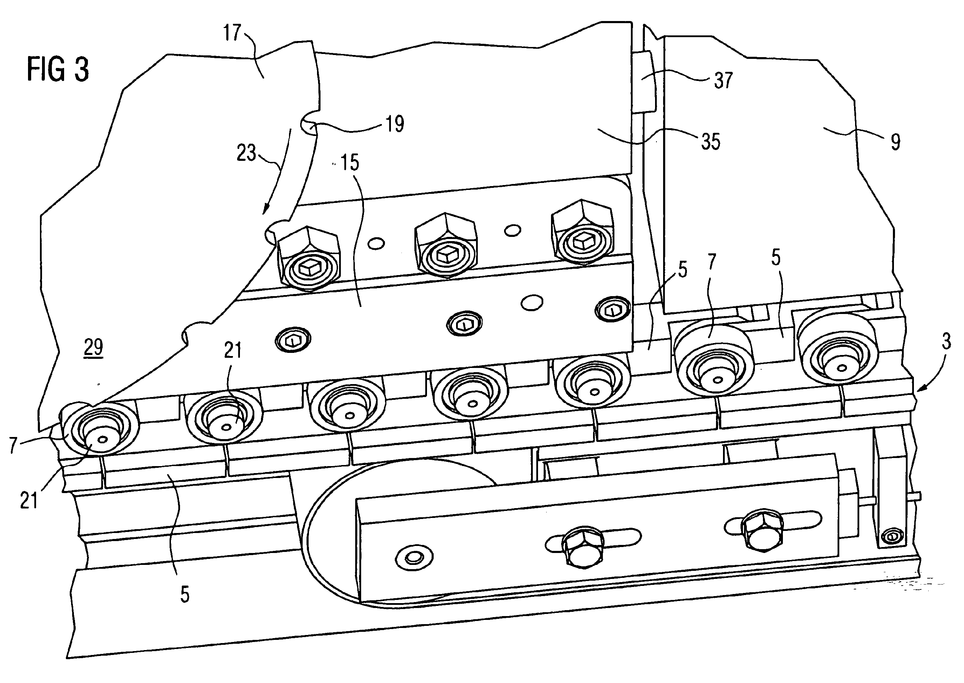

Die Darstellung gemäß FIG 3 zeigt im Detail den Einlaufbereich 29 der Kette 3 bei einer Umlaufrichtung 23. Neben der detaillierten Darstellung der miteinander verknüpften Kettenglieder 5 zeigt sich auch die Problematik bezüglich von Stößen, Vibrationen und Schwingungen im Ketteneinlaufbereich 29 die natürlich eine bestimmte Umlaufrichtung 23 voraussetzt. Bedingt durch die Aufhängung des Spannkörpers 35 über Zylinder 37 ergeben sich bezüglich des Maschinenkörpers Schwingungen bzw. Vibrationen. Dadurch stoßen beispielsweise die Führungsräder 7 an die Führungseinrichtung 15, woraus Verschleißerscheinungen resultieren. Wird nun allerdings durch eine magnetische Kraft ein oder mehrere Führungsräder 7 an der Führungseinrichtung 15 gehalten, so ergibt sich ein ruhigeres Laufverhalten der Kette 3.

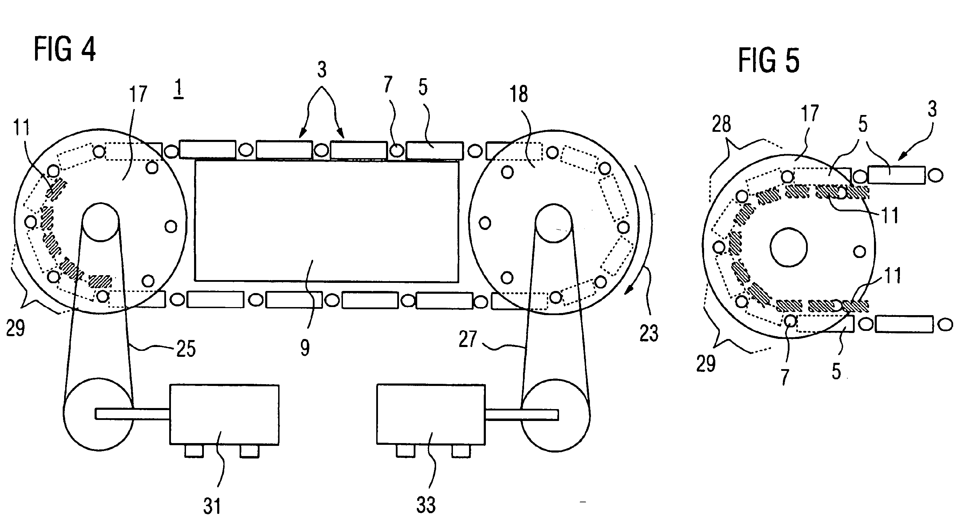

Die Darstellung gemäß FIG 4 zeigt eine gegenüber den vorangegangenen Figuren schematisiertere Darstellung wobei beidseitig der Kettenumlaufeinrichtung 1 Umlenkeinrichtungen 17, 18 gezeigt sind. Der Antrieb der Umlenkeinrichtungen 17, 18 erfolgt hier nur beispielshaft über Riemenäntriebe 25, 27, wobei die Riemenantriebe 25, 27 an Antriebsmaschinen 31, 33 mechanisch angekoppelt sind. Die Antriebsmaschinen 31, 33 sind insbesondere elektrische Maschinen, welche regelbar bzw. steuerbar ausgeführt sind. Die Darstellung gemäß FIG 4 zeigt die Anordnung von Magneten 11 im Bereich des Ketteneinlaufs 29. Im Gegensatz zu den Darstellungen gemäß FIG 1 bis 3, weist die Kettenumlaufeinrichtung nach FIG 4 nunmehr eine einstückige Ausführung auf, die nunmehr keine Feder 39 zur Spannung der Kette, z.B. der Transportkette benötigt. Durch Wegfall dieser Spannvorrichtung mittels der Feder lassen sich die Probleme bezüglich der Vibrationen und Schwingungen zumindest reduziert bzw. treten diese nicht mehr auf, da das anregende Glied, nämlich der Spannkörper entfallen ist. Mit der Vorrichtung zum magnetischen Anzug der Führungsräder 7 als Laufrollen auf eine Führungsbahn die durch eine in der FIG 4 nicht dargestellten Führungseinrichtung vorgegeben ist, können die beiden Umlenkeinrichtungen 17 und 18, welche als Kettenradköpfe fungieren, mit den Maschinenkörper 9 drehbar verbunden werden. Es entfällt folglich die Fügestelle zwischen Maschinenkörper 9 und einem Spannkörper. Auch ein Nachspannen der Kette 3 ist durch den Einsatz der Magnete 11 vermeidbar. Die positive Wirkung des Anziehens der Kettenglieder an die Führungsbahn kann durch ein gegenseitiges Vorspannen der beiden Umlenkeinrichtungen 17, 18 weiter unterstützt werden. Hierbei wird beispielsweise eine Umlenkeinrichtung 17 gegenüber der anderen Umlenkeinrichtung 18 mit einem Vorspanndrehmoment beaufschlagt. Alternativ oder dazu ist es möglich, die zweite Umlenkeinrichtung 18 mittels eines zweiten Antriebs unter Vorgabe eines Bremsmomentes bzw. mittels einer Bremse, welche einen Bremsmoment ausführt, vorzuspannen.

Die Darstellung gemäß FIG 4 zeigt, dass durch die magnetisch angezogenen Transportrollen an der unteren Ketteanlaufseite die Kettenglieder (Kettenwägen) fest an die Führung gezogen werden, so dass kein Abprellen mehr möglich ist. Bestehen die Führungen aus einem elastischen Material z.B. Stahlband, das die Aufprellenergie schlucken kann, so wird der Verschleiß nochmals reduziert.

Mit der beschriebenen Anordnung ist kein manuelles Spannen der Kette nötig, da beide Kettenradköpfe fest mit den Maschinenkörper verbunden sind und die Kette für den ganzen Umfang ohne Fügestellen geführt ist.

Die Darstellung gemäß FIG 5 zeigt im Vergleich zu FIG 4 eine Umlenkeinrichtung 17, bei der die Magnete 11 sowohl in einen Bereich des Ketteneinlaufs 29 als auch in einem Bereich des Kettenauslaufs 28, die Kette 3 anziehen und führen.

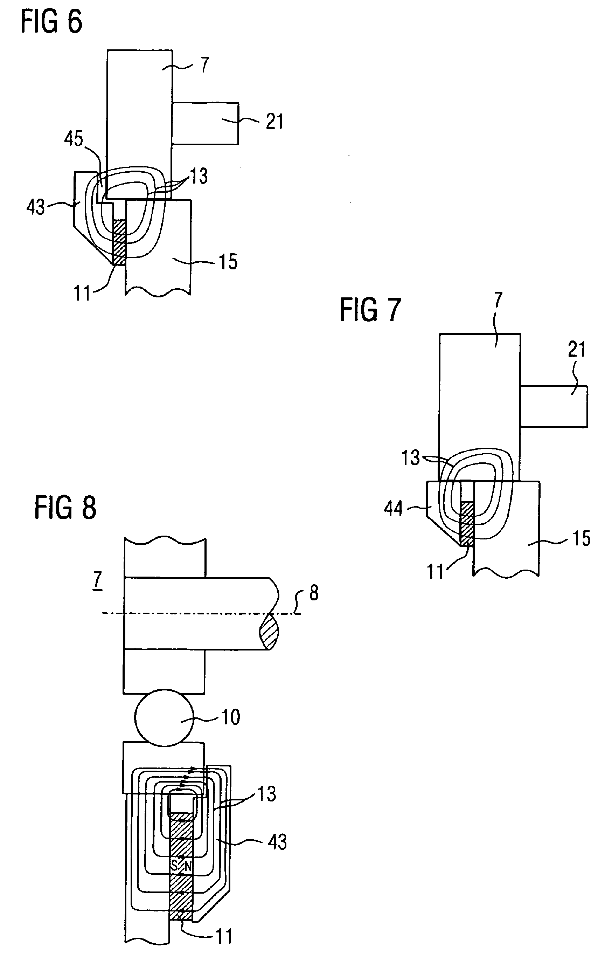

Dies Darstellung gemäß FIG 6 zeigt ein Führungsrad 7 mit einen Mitnahmedorn 21. Das Führungsrad 7 liegt auf einer Führungseinrichtung 15 auf. An der Führungseinrichtung 15 liegt ein Magnet 11 an. Mittels eines Flussleitstückes 43 wird der magnetische Fluss bzw. das magnetische Feld, welches durch magnetische Feldlinien 13 dargestellt ist, geführt. Die Führung mittels des Flussleitstückes 43 erfolgt unter Ausbildung eines Luftspaltes 45.

Die Darstellung gemäß FIG 7 zeigt in Anlehnung an FIG 6 ein Führungsrad 7, wobei das Flussleitstück 44 derart ausgeführt ist, dass es neben der Führungseinrichtung 15, welche bereits eine Lauffläche für das Führungsrad 7 ausbildet, auch eine Teillauffläche für dieses Führungsrad 7 ausbildet. Derart ist ein Luftspalt vermeidbar.

Die Darstellung gemäß FIG 8 zeigt detaillierter das Führungsrad 7 nunmehr auch mit einer Führungsradachse 8. Bezüglich des Magneten 11 ist auch die magnetische Polverteilung durch N als Nordpol und S als Südpol dargestellt.

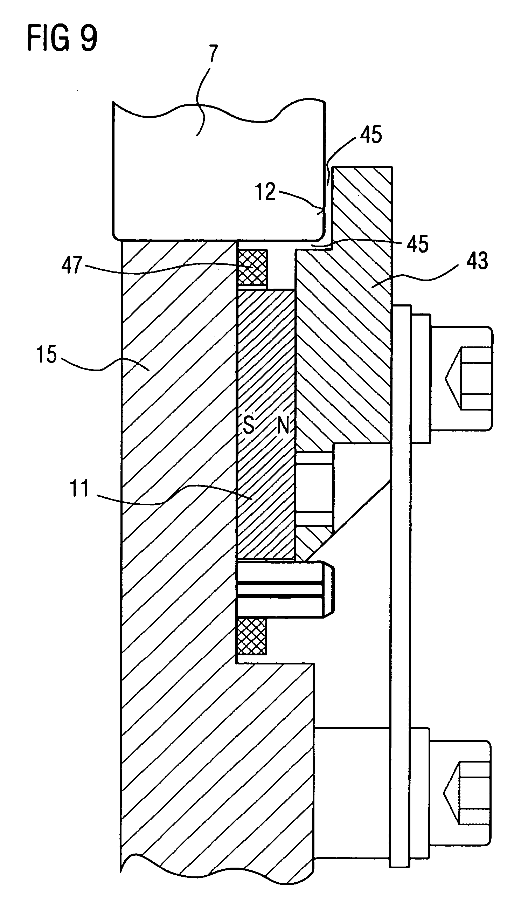

Die Darstellung gemäß FIG 9 zeigt die Verwendung einer Schablone 47 zur Positionierung des Magneten 11. Dies Schablone 47 ist als verlorene Schablone 47 ausgeführt und dient als Hilfsmittel zur Positionierung der einzelnen Magneten 11, wobei die Schablone 11 im Werkstück verbleiben kann. Die Magnetpole sind beispielsweise so ausgerichtet, dass der Nordpol immer nach außen zeigt. Da sich gleichnamige Pole abstoßen, werden die einzelnen Magnete 11 auf der Anbringungsfläche auseinanderstreben, so dass beispielsweise ein geordneter Klebevorgang ohne dass Hilfsmittel einer Schablone 47, zu aufwendig ist.

Der magnetische Kreis ist so auszubilden, dass ein möglichst großer Teil der Laufbahnbreite des Führungsrades 7 erhalten bleibt. In vorteilhafter Weise ist deshalb der magnetische Rückschluss in die Seitenfläche 12 des Führungsrades 7 in großen Teilen verlagert.

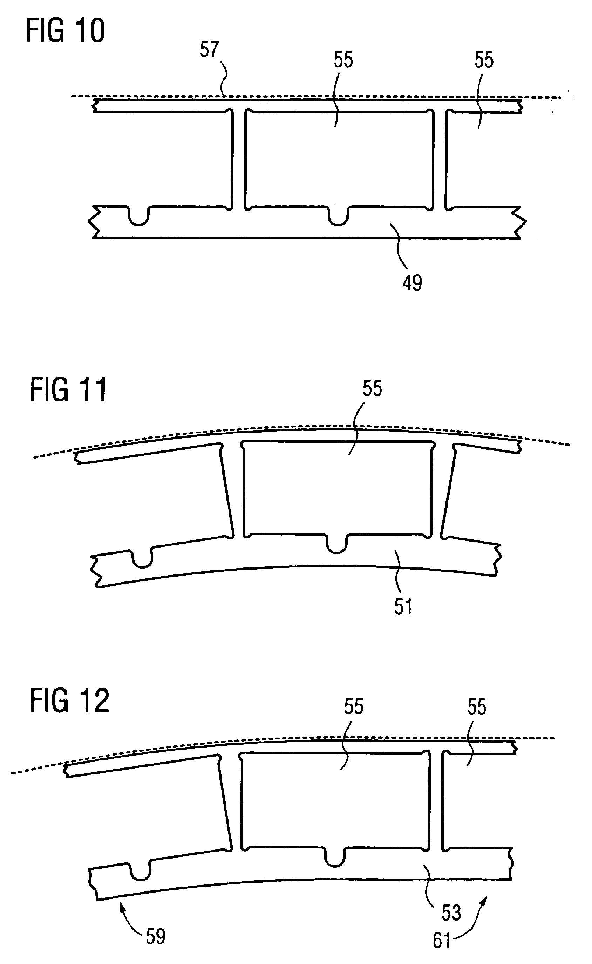

Die Darstellung gemäß FIG 10 zeigt eine gerade Schablone 49, welche für eine Führungseinrichtung mit geradem Verlauf vorsehbar ist. Die gestrichelte Linie stellt die Laufbahnfläche 57 für die Führungsräder dar. Zur Aufnahme der Magnete sind Aussparungen 55 vorgesehen.

Die Darstellung gemäß FIG 11 zeigt eine gekrümmte Schablone 51, die insbesondere für den Bereich der Umlenkeinrichtungen vorgesehen ist.

Die Darstellung gemäß FIG 12 zeigt eine halbgekrümmte Schablone, welche sowohl einen gekrümmten Ansatz 59, wie auch einen geraden Ansatz 61 aufweist. Diese halbgekrümmte Schablone 52, insbesondere für Bereiche des Ketteneinlaufs bzw. Bandeinlaufs wie auch des Kettenauslaufs bzw. Bandauslaufs vorsehbar. Die Schablone ist beispielsweise aus einen unmagnetischen Edelstahl wie V2a hergestellt und weist eine Materialstärke von 1,5 mm auf.

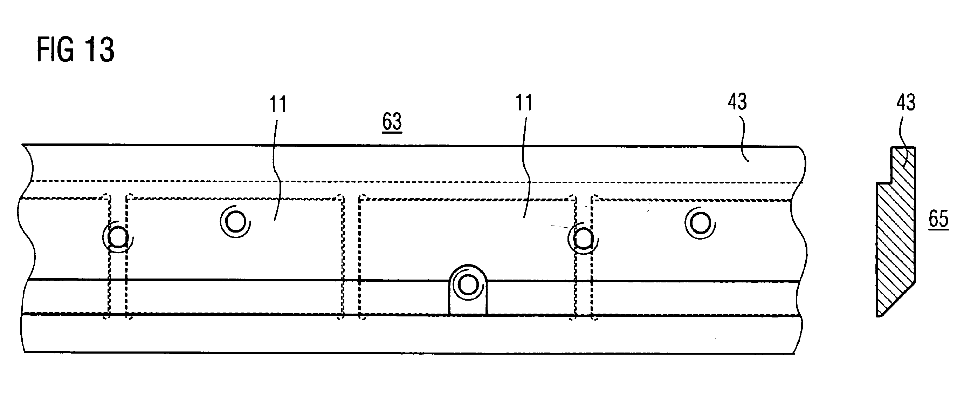

Die Darstellung gemäß FIG 13 zeigt ein Flussleitstück 43 in einer Längsdarstellung 63 bzw. einer Schnittdarstellung 65. In der Längsdarstellung 63 sind die Positionen der Magnete 11 durch eine Strichlinierung dargestellt.

## Patentansprüche

1. Verfahren zur Führung einer Kette (3) einer Kettenumlaufeinrichtung (1) bzw. Verfahren zur Führung eines Bandes (42) einer Bandumlaufeinrichtung (41), wonach mittels eines Mittels zur Erzeugung eines magnetischen Feldes (11) eine magnetische Kraft auf die Kette (3) oder das Band (42) ausgeübt wird, **dadurch gekennzeichnet , dass** die Kette (3) oder das Band (42) an eine Führungseinrichtung (15) gezogen wird, wobei das magnetische Feld (13) über einen Luftspalt (45) geführt wird, wonach die Größe des Luftspaltes (45) zur Regelung der magnetischen Kraft auf die Kette (3) oder auf das Band (42) verändert wird, wobei die magnetische Kraft abhängig von einer Geschwindigkeit der Kette (3) oder des Bandes (42) verändert wird.

2. Verfahren nach Anspruch 1, **dadurch gekennzeichnet, dass** die Kette (3) bzw. das Band (42) mittels eines elektrischen Mittels gespannt werden.

3. Umlaufeinrichtung (1) für eine Kette oder ein Band, welche eine Kette (3) oder ein Band aufweist, wobei die Kette (3) oder das Band mittels zumindest einer Umlenkeinrichtung (17) umlenkbar ist und die Kette (3) oder das Band zumindest in einem Abschnitt der Umlaufbahn mittels einer Führungseinrichtung (15) führbar ist, wobei ein Mittel zur Erzeugung eines magnetischen Feldes (11) zur Ausübung einer magnetischen Kraft auf die Kette (3) zumindest in einem Bereich der Führungseinrichtung (15,16) vorgesehen ist, wobei durch das Mittel zur Erzeugung des magnetischen Feldes (11) eine Kraft auf die Kette (3) oder das Band ausübbar ist, wobei durch die Kraft die Kette (3) oder das Band an die Führungseinrichtung (15,16) drückbar ist, wobei zumindest ein Flussleitstück (43) zur Leitung des magnetischen Flusses (13) vorgesehen ist, wobei insbesondere das Flussleitstück (43) an einen Luftspalt (45) anschließt, wobei der magnetische Fluss (13) über den Luftspalt (45) geführt ist, **dadurch gekennzeichnet, dass** die Größe des Luftspaltes (45) zur Regelung der magnetischen Kraft auf die Kette (3) oder auf das Band (42) veränderbar ist, wobei ein Mittel zur Regelung der magnetischen Kraft abhängig von einer Geschwindigkeit der Kette (3) oder des Bandes (42) vorgesehen ist.

4. Umlaufeinrichtung (1) nach Anspruch 3, **dadurch gekennzeichnet , dass** die Kette (3) oder das Band das Mittel zur Erzeugung eines magnetischen Feldes aufweist und/oder das Mittel zur Erzeugung des magnetischen Feldes (11) stationär in Bezug auf die Führungseinrichtung (15, 16) ist.

5. Umlaufeinrichtung (1) nach einem der vorgenannten Ansprüche, **dadurch gekennzeichnet , dass** das Mittel zur Erzeugung des magnetischen Feldes (11) in einem Bereich der Umlenkeinrichtung (17) bzw. insbesondere in einem Bereich des Ketteneinlaufs (29,30) angeordnet ist.

6. Umlaufeinrichtung (1) nach einem der vorgenannten Ansprüche, **dadurch gekennzeichnet , dass** das Mittel zur Erzeugung eines magnetischen Flusses (11) einen magnetisierten Werkstoff aufweist, bzw. dass das Mittel zur Erzeugung eines magnetischen Flusses (13) einen Elektromagneten aufweist.

7. Produktionsmaschine bzw. Werkzeugmaschine, welche eine Umlaufeinrichtung nach einem der Ansprüche 3 bis 6 aufweist, **dadurch gekennzeichnet , dass** ein Sensor zur Verschleißerkennung einer Kette (3) bzw. einer Führungseinrichtung (15,16) bzw. einer Umlenkeinrichtung (17, 18) vorgesehen ist.

8. Produktionsmaschine bzw. Werkzeugmaschine welche eine Umlaufeinrichtung nach einem der Ansprüche 3 bis 6 aufweist, **dadurch gekennzeichnet , dass** die Kette (3) bzw. das Band (45) mit zumindest einem elektrischen Mittel spannbar ist.

9. Kettenfahrzeug welches als Mittel zur Fortbewegung eine Umlaufeinrichtung nach einem der Ansprüche 3 bis 6 aufweist.

## Claims

1. Method for guiding a chain (3) of a chain rotary mechanism (1) or method for guiding a belt (42) of a belt rotary mechanism (41), whereby a magnetic force is applied to the chain (3) or belt (42) by a means for generating a magnetic field (11), **characterised in that** the chain (3) or the belt (42) is drawn against a guide assembly (15), wherein the magnetic field (13) is conducted across an air gap (45), whereby the size of the air gap (45) is varied in order to regulate the magnetic force acting on the chain (3) or belt (42), wherein the magnetic force is varied as a function of a speed of the chain (3) or belt (42).

2. Method according to claim 1, **characterised in that** the chain (3) or belt (42) is tensioned using an electric means.

3. Rotary mechanism (1) for a chain or belt, which rotary mechanism has a chain (3) or belt, wherein the chain (3) or belt can be deflected by means of at least one deflecting mechanism (17) and the chain (3) or belt can be guided by means of a guide assembly (15) in at least one section of the rotational path, wherein a means for generating a magnetic field (11) for the purpose of applying a magnetic force to the chain (3) is provided in at least one section of the guide assembly (15,16), wherein a force can be applied to the chain (3) or belt by the means for generating the magnetic field (11), wherein the chain (3) or belt can be pressed against the guide assembly (15,16) by means of the force, wherein at least one flux-conducting component (43) is provided for the purpose of conducting the magnetic flux (13), wherein the flux-conducting component (43) is positioned in particular adjacent to an air gap (45), wherein the magnetic flux (13) is conducted across the air gap (45), **characterised in that** the size of the air gap (45) can be varied in order to regulate the magnetic force acting on the chain (3) or belt (42), wherein a means for regulating the magnetic force is provided as a function of a speed of the chain (3) or belt (42) .

4. Rotary mechanism (1) according to claim 3, **characterised in that** the chain (3) or belt has the means for generating a magnetic field and/or the means for generating the magnetic field (11) is stationary in relation to the guide assembly (15, 16).

5. Rotary mechanism (1) according to one of the preceding claims, **characterised in that** the means for generating the magnetic field (11) is disposed in a region of the deflecting mechanism (17) and in particular in a region of the chain entry (29, 30) .

6. Rotary mechanism (1) according to one of the preceding claims, **characterised in that** the means for generating a magnetic flux (11) includes a magnetised material, or **in that** the means for generating a magnetic flux (13) includes an electromagnet.

7. Production machine or machine tool which has a rotary mechanism according to one of claims 3 to 6,
**characterised in that** a sensor is provided for the purpose of detecting wear and tear in a chain (3) or in a guide assembly (15,16) or in a deflecting mechanism (17, 18).

8. Production machine or machine tool which has a rotary mechanism according to one of claims 3 to 6,
**characterised in that** the chain (3) or belt (45) can be tensioned using at least one electric means.

9. Tracked vehicle which has a rotary mechanism according to one of claims 3 to 6 as a means of locomotion.

## Revendications

1. Procédé de guidage d'une chaîne ( 3 ) d'un entraînement ( 1 ) rotatif à chaîne et respectivement procédé de guidage d'une courroie ( 42 ) d'un entraînement ( 41 ) rotatif à courroie, dans lequel on applique à la chaîne ( 3 ) ou à la courroie ( 42 ) une force magnétique à l'aide d'un moyen de production d'un champ ( 11 ) magnétique, **caractérisé en ce que** l'on tire la chaîne ( 3 ) ou la courroie ( 42 ) sur un dispositif ( 15 ) de guidage, le champ ( 13 ) magnétique passant par un entrefer ( 45 ), la dimension de l'entrefer ( 45 ) étant modifiée pour réguler la force magnétique sur la chaîne ( 3 ) ou sur la courroie ( 42 ), la force magnétique étant modifiée en fonction d'une vitesse de la chaîne ( 3 ) ou de la courroie ( 42 ).

2. Procédé suivant la revendication 1, **caractérisé en ce que** l'on tend la chaîne ( 3 ) ou la courroie ( 42 ) à l'aide d'un moyen électrique.

3. Entraînement ( 1 ) en rotation pour une chaîne ou une courroie, qui a une chaîne ( 3 ) ou une courroie, la chaîne ( 3 ) ou la courroie pouvant être renvoyée à l'aide d'au moins un dispositif ( 17 ) de renvoi et la chaîne ( 3 ) ou la courroie pouvant être guidée au moins dans un tronçon du trajet de rotation à l'aide d'un dispositif ( 15 ) de guidage, un moyen de production d'un champ ( 11 ) magnétique étant prévu pour appliquer une force magnétique sur la chaîne ( 3 ) au moins dans une partie du dispositif ( 15, 16 ) de guidage, une force pouvant être appliquée sur la chaîne ( 3 ) ou sur la courroie par le moyen de production du champ ( 11 ) magnétique, dans lequel, par la force, la chaîne ( 3 ) ou la courroie peut être repoussée sur le dispositif ( 15, 16 ) de guidage, au moins une pièce ( 43 ) de conduite du flux pour conduire le flux ( 13 ) magnétique étant prévu, la pièce ( 43 ) de conduite du flux faisant notamment suite à un entrefer, le flux ( 13 ) magnétique étant guidé par l'entrefer ( 45 ), **caractérisé en ce que** la dimension de l'entrefer ( 45 ) peut être modifiée pour réguler la force magnétique sur la chaîne ( 3 ) ou sur la courroie ( 42 ) en prévoyant un moyen de régulation de la force magnétique en fonction d'une vitesse sur la chaîne ( 3 ) ou sur la courroie ( 42 ).

4. Entraînement ( 1 ) en rotation suivant la revendication 3, **caractérisé en ce que** la chaîne ( 3 ) ou la courroie a le moyen de production du champ ( 11 ) magnétique et/ou le moyen de production du champ ( 11 ) magnétique est fixe par rapport au dispositif ( 15, 16 ) de guidage.

5. Entraînement ( 1 ) suivant l'une des revendications précédentes, **caractérisé en ce que** le moyen de production du champ ( 11 ) magnétique est disposé dans une partie du dispositif ( 17 ) de renvoi et, notamment, dans une partie de l'entrée ( 29, 30 ) de la chaîne.

6. Entraînement ( 1 ) suivant l'une des revendications précédentes, **caractérisé en ce que** le moyen de production d'un flux ( 11 ) magnétique comporte un matériau magnétisé ou **en ce que** le moyen de production d'un flux ( 13 ) magnétique comporte un électroaimant.

7. Machine de production ou machine-outil qui a un entraînement en rotation sur l'une des revendications 3 à 6, **caractérisée en ce qu'**il est prévu un capteur de détection de l'usure de chaîne ( 3 ) ou d'un dispositif ( 15, 16 ) de guidage ou d'une dispositif ( 17, 18 ) de renvoi.

8. Machine de production ou machine-outil qui a un entraînement en rotation suivant l'une des revendications 3 à 6, **caractérisée en ce que** la chaîne ( 3 ) et respectivement la courroie ( 45 ) peut être tendue par au moins un moyen électrique.

9. Véhicule à chaîne qui a, comme moyen de locomotion, un entraînement en rotation sur l'une des revendications 3 à 6.
